# EUROPÄISCHE PATENTSCHRIFT

(11) **EP 3 256 889 B1**
(45) Veröffentlichungstag und Bekanntmachung des Hinweises auf die Patenterteilung: **17.04.2024**
(21) Anmeldenummer: 16706326.2
(22) Anmeldetag: 11.02.2016
(51) Int. Cl.: G02B 5/18, G02C 7/08

(54) **VERFAHREN ZUM HERSTELLEN EINES BRILLENGLASES FÜR EINE AUF DEN KOPF EINES BENUTZERS AUFSETZBARE UND EIN BILD ERZEUGENDE ANZEIGEVORRICHTUNG**
METHOD OF MANUFACTURING A SPECTACLE LENS FOR A HEAD-MOUNTABLE IMAGE DISPLAY DEVICE
PROCÉDÉ DE FABRICATION D'UN VERRE À LUNETTES POUR UN DISPOSITIF D'AFFICHAGE MONTÉ SUR LA TÊTE

(30) Priorität: 12.02.2015 DE 102015102032
(43) Veröffentlichungstag der Anmeldung: 20.12.2017
(73) Patentinhaber: tooz technologies GmbH, 73430 Aalen (DE)
(72) Erfinder: HOFMANN, Jens, 07743 Jena (DE); PÜTZ, Jörg, 73431 Aalen (DE); MICHELS, Georg, 73430 Aalen (DE); KRAUSE, Wolf, 73457 Essingen (DE); KELCH, Gerhard, 73434 Aalen (DE)
(74) Vertreter: Patentanwälte Geyer, Fehners & Partner mbB
(86) Internationale Anmeldenummer: PCT/EP2016/052917
(87) Internationale Veröffentlichungsnummer: WO 2016/128512

(56) Entgegenhaltungen:
- WO-A1-2012/088478
- WO-A1-2013/116745
- WO-A2-2016/046125
- DE-A1-102009 010 537
- US-A1- 2014 043 850
- US-B1- 8 665 178

## Beschreibung

Die vorliegende Erfindung betrifft ein Verfahren zum Herstellen eines Brillenglases für eine auf den Kopf eines Benutzers aufsetzbare und ein Bild erzeugende Anzeigevorrichtung mit den Merkmalen des Oberbegriffs des Anspruches 1.

Das Brillenglas kann Teil einer Abbildungsoptik der Anzeigevorrichtung sein und die Abbildungsoptik kann das erzeugte Bild im auf dem Kopf des Benutzers aufgesetzten Zustand der Anzeigevorrichtung so abbilden, dass es der Benutzer als virtuelles Bild wahrnehmen kann.

Die US 8 665 178 B1 beschreibt ein Verfahren zum Herstellen eines Brillenglases für eine auf den Kopf eines Benutzers aufsetzbare und ein Bild erzeugende Anzeigevorrichtung der eingangs genannten Art.

Es besteht zunehmend der Bedarf, ein solches Brillenglas mit einer vergrabenen optisch wirksamen Struktur in großen Stückzahlen und hoher Genauigkeit herstellen zu können.

Es ist daher Aufgabe der Erfindung, ein Verfahren zum Herstellen eines Brillenglases der eingangs genannten Art bereitzustellen, das eine Herstellung des Brillenglases mit hoher Qualität bei großen Stückzahlen ermöglicht.

Die Erfindung ist in den unabhängigen Ansprüchen 1, 8 und 12 definiert. Vorteilhafte Weiterbildungen sind in den abhängigen Ansprüchen angegeben.

Mit diesem erfindungsgemäßen Verfahren kann das Brillenglas mit nur zwei Schalen (insbesondere mit genau zwei Schalen) mit der gewünschten Genauigkeit in großer Stückzahl hergestellt werden.

Die erste und zweite Schale werden in den Schritten a) und c) jeweils als formstabile Schale bereitgestellt. Unter einer formstabilen Schale wird insbesondere eine Schale verstanden, die ihre Form beibehält, wenn außer der Schwerkraft keine anderen Kräfte auf sie einwirken.

Ferner können die erste und zweite Schale in den Schritten a) und c) so bereitgestellt werden, dass die Oberseite und die Unterseite gekrümmt ausgebildet sind. Des Weiteren können die erste und zweite Schale so bereitgestellt werden, dass die jeweilige von der Ober- und Unterseite wegweisende Seite gekrümmt ausgebildet ist. Die Krümmung kann dabei eine sphärische Krümmung, eine asphärische Krümmung oder eine sonstige Krümmung sein.

Die erste Schale kann im Schritt a) so bereitgestellt werden, dass die Oberseite mit Ausnahme des strukturierten Abschnittes als glatte Fläche ausgebildet wird.

Des Weiteren kann nach dem Schritt b) zumindest eine durch den strukturieren Abschnitt gebildete Vertiefung mit Material bis zur Oberseite aufgefüllt werden. Dabei wird bevorzugt das gleiche Material verwendet, aus dem die erste Schale gebildet ist.

Die Auffüllung kann in einem Schritt oder in mehreren Auffüllschritten durchgeführt werden. Insbesondere wird die Auffüllung so durchgeführt, dass eine glatte durchgehende Oberseite vorliegt. Der aufgefüllt strukturierte Abschnitt bildet somit zusammen mit der restlichen Oberseite eine durchgehende Fläche.

Bei dem erfindungsgemäßen Verfahren kann im Schritt d) die Kleberschicht auf der gesamten Oberseite der ersten Schale und/oder der gesamten Unterseite der zweiten Schale aufgebracht werden. Insbesondere kann auch der strukturierte Abschnitt (bevorzugt wenn er bis zur Oberseite mit Material aufgefüllt ist) mit der Kleberschicht versehen werden.

Bei der Kleberschicht kann es sich z. B. um einen optischen Kleber oder um einen optischen Kitt handeln. Insbesondere kann es sich um eine Kleberschicht handeln, deren klebende bzw. verbindende Eigenschaft durch Aktivierung erzeugt wird. Es kann sich beispielsweise um einen UV-Kleber handeln.

Die erste Schale, die auch als erster Teilkörper oder erstes Halbzeug bezeichnet werden kann, kann aus einem ersten Polymermaterial und die zweite Schale, die auch als zweiter Teilkörper oder zweites Halbzeug bezeichnet werden kann, kann aus einem zweiten Polymermaterial hergestellt sein. Das erste Polymermaterial und das zweite Polymermaterial kann jeweils ein thermoplastisches Material und/oder ein duroplastisches Material sein. Als thermoplastisches Material kann z. B. PMMA (Polymethylmethacrylat, z. B. Plexiglas), PA (Polyamide, z. B. Trogamid CX), COP (Cycloolefin-Polymere, z. B. Zeonex), PC (Polycarbonat, Poly(bisphenol-A-carbonat), z. B. Makrolon, insbesondere LQ 2647), LSR (Liquid Silicone Rubber, z. B. Silopren, Elastosil), PSU (Polysulfon, z. B. Ultrason), PES (Polyethersulfon) und/oder PAS (Polyarylensulfon) verwendet werden. Als duroplastisches Material kann z. B. ADC (Allyl-Diglykolcarbonat, z. B. CR-39), Acrylate (z. B. Spectralite), PUR (Polyurethane, z. B. RAVolution), PU/PUR (Polyharnstoffe, Polyurethane, z. B. Trivex), PTU (Polythiourethane, z. B. MR-8, MR-7) und/oder Polymere auf Episulfid/Polythiol-Basis (z. B. MR-174) verwendet werden.

Insbesondere kann die optisch wirksame Struktur vollständig im Brillenglas eingebettet sein, so dass sie sich zu keiner äußeren Grenzfläche des Brillenglases erstreckt. Bevorzugt ist die optisch wirksame Struktur in ihren Abmessungen kleiner als die Abmessungen des Brillenglases. Man kann auch sagen, dass die optisch wirksame Struktur nur in einem Teil des Brillenglases ausgebildet ist. Die eingebettete optisch wirksame Struktur kann eine maximale laterale Abmessung aufweisen, die kleiner ist als die maximale laterale Abmessung des Brillenglases. Insbesondere kann sie kleiner als 50% der lateralen Abmessung des Brillenglases oder auch kleiner als 40%, 30%, 20% der lateralen Abmessung des Brillenglas sein. Die optisch wirksame Struktur ist somit bevorzugt im Brillenglas eingebettet aber nur partiell vorgesehen.

Bei dem erfindungsgemäßen Verfahren kann nach dem Schritt b) und vor dem Schritt d) auf der optisch wirksamen Beschichtung eine Schutzschicht aus duroplastischem Material durch Gießen aufgebracht werden. Dazu kann insbesondere das RIM-Verfahren (Reaction Injection Moulding-Verfahren) eingesetzt werden. Dabei können z. B. zwei Komponenten unmittelbar vor dem Injizieren in eine Form vermischt werden, so dass die Komponenten miteinander reagieren und ein gewünschtes chemisch vernetztes Polymer bilden können. Die erste Schale ist dabei bevorzugt in einer entsprechenden Form positioniert, so dass die gewünschte Schutzschicht gebildet werden kann.

Die optisch wirksame Struktur ist als reflektive Struktur ausgebildet. Insbesondere kann die optisch wirksame Struktur als teilreflektive Struktur und/oder wellenlängenabhängige reflektive Struktur ausgebildet sein.

Die Bildung der ersten und/oder zweiten Schale kann insbesondere jeweils in zumindest zwei aufeinanderfolgenden Teilschritten durchgeführt werden. Dies führt zu einem verringerten Schwund bei der Herstellung der ersten bzw. zweiten Schale.

Bei dem erfindungsgemäßen Verfahren können als erstes und zweites Polymermaterial solche Materialien verwendet werden, deren Brechzahlen sich für zumindest eine Wellenlänge aus dem vorbestimmten Wellenlängenbereich um nicht mehr als 0,005 oder 0,001 unterscheiden. Insbesondere können sich die Brechzahlen um nicht mehr als 0,0005 unterscheiden. Bei einem solch geringen Brechzahlunterschied verschwindet quasi optisch die Grenzfläche zwischen den beiden Polymermaterialien für den vorbestimmten Wellenlängenbereich. Insbesondere können die Polymermaterialien so gewählt sein, dass sie im vorbestimmten Wellenlängenbereich die gleiche Dispersion aufweisen.

Bei dem vorbestimmten Wellenlängenbereich kann es sich um den sichtbaren Wellenlängenbereich, den nahen Infrarotbereich, den Infrarotbereich und/oder den UV-Bereich handeln.

Zum Bereitstellen der ersten Schale gemäß Schritt a) und der zweiten Schale gemäß Schritt c) kann jeweils ein Urformverfahren (wie z. B. Spritzguss, Spritzprägen, RIM, Abgießen), ein Umformverfahren (wie z. B. Thermoforming, Hot Embossing), ein abtragendes und/oder trennendes Verfahren (wie z. B. Diamantzerspanung, Ionenbeschuss, Ätzen) eingesetzt werden. Natürlich ist es auch möglich, diese Verfahren zur Bereitstellung der ersten oder zweiten Schale miteinander zu kombinieren.

Die erste Schale sowie die zweite Schale sind jeweils insbesondere als formstabiles Halbzeug gebildet, die mittels der Kleberschicht miteinander verbunden werden.

Insbesondere kann die erste Schale eine mittlere Dicke aus dem Bereich von 2 mm - 5 mm (z.B. 3,5 mm) aufweisen und kann die zweite Schale eine mittlere Dicke aus dem Bereich von 0,15 mm bis 2 mm oder aus dem Bereich von 0,15 mm bis 0,25 mm (z.B. 0,17 mm) aufweisen. Das Verhältnis der mittleren Dicke der ersten Schale zur mittleren Dicke der zweiten Schale kann im Bereich von 5 - 40, 10 - 35, 15 - 25 oder 18 - 22 (z.B. 20, 20,5 oder 21) liegen.

Die erste Schale kann einen Bereich am Rand (bzw. einen randständigen Bereich) aufweisen, der eine größere Dicke als die mittlere Dicke der ersten Schale aufweist. Der randständige Bereich wird bevorzugt bei der Bestimmung der mittleren Dicke der ersten Schale nicht berücksichtigt. Des Weiteren kann der randständige Bereich einstückig mit der ersten Schale ausgebildet sein oder kann ein separates Element sein, das mit der ersten Schale verbunden ist. Zum Beispiel kann der randständige Bereich mit der ersten Schale verklebt oder verkittet sein. Der randständige Bereich kann so ausgebildet sein, dass er zumindest eine weitere optische Funktionalität bereitstellt. Dabei kann es sich insbesondere um eine diffraktive und/oder reflektive optische Funktionalität handeln. Insbesondere kann die erste Schale mit dem randständigen Bereich so ausgebildet sein, dass sie L-förmig ist.

Das Aufbringen der optisch wirksamen Beschichtung gemäß Schritt b) kann beispielsweise durch Aufdampfen, Sputtern, CVD (chemisches Abscheiden aus der Gasphase), Nassbeschichtung, etc. erfolgen. Die Beschichtung kann eine Einzelschicht sein. Es ist jedoch auch möglich, mehrere Schichten aufzubringen. Insbesondere kann auch ein Interferenzschichtsystem aufgebracht werden. Ferner kann zusätzlich zumindest eine Schicht zur Haftvermittlung, eine Schicht zum mechanischen Ausgleich, eine Schutzschicht (Diffusion/Migration, thermischer Schutz, chemischer Schutz, UV-Schutz etc.) aufgebracht werden. Die optisch wirksame Beschichtung kann für spezielle Wellenlängen bzw. Spektralbereiche ausgelegt sein. Ferner kann sie zusätzlich oder alternativ ihre Funktion abhängig vom Einfallswinkel, von der Polarisation und/oder von weiteren optischen Eigenschaften aufweisen. Die optisch wirksame Struktur kann reflektierend, insbesondere hochreflektierend (z. B. spiegelartig), teildurchlässig/teilverspiegelt sein und/oder kann eine Filterwirkung bereitstellen..

Die optisch wirksame Beschichtung kann nur auf den strukturierten Abschnitt aufgebracht werden. Alternativ ist es möglich, die optisch wirksame Beschichtung vollflächig aufzubringen und dann in den nicht benötigten Flächenabschnitten zu entfernen. Für ein solches Entfernen kann man z. B. chemisches Ätzen oder Ionenätzen einsetzen.

Für die optisch wirksame Beschichtung kann zumindest ein Metall, zumindest ein Metalloxid, zumindest ein Metallnitrid verwendet werden. Auch ein organisches Material und/oder ein Polymermaterial kann verwendet werden. Ferner können sogenannte Hybridmaterialien, wie z. B. organisch-anorganische Hybridsysteme, organisch-modifizierte Silane/Polysiloxane verwendet werden.

Bei dem erfindungsgemäßen Verfahren können die Schritte a) - e) so durchgeführt werden, dass die optisch wirksame Struktur vollständig im transparenten Körper eingebettet ist. Somit erstreckt sich die optisch wirksame Struktur zu keiner Materialgrenzfläche des transparenten Körpers.

Ferner können die Schritte a) - e) so ausgeführt werden, dass die optisch wirksame Struktur voneinander beabstandete Flächenstücke aufweist, die die gewünschte optische Funktion bereitstellen. Die Flächenstücke können beispielsweise reflektive Flächenstücke sein. Die reflektiven Flächenstücke können eine vollständige Reflexion (nahezu 100%) oder auch nur eine Teilreflexion (teilreflektive Flächenstücke) bewirken. Insbesondere liegen die reflektiven Flächenstücke in keiner gemeinsamen Ebene. Sie können zueinander parallel versetzt sein.

Die reflektiven Flächenstücke können zusammen eine umlenkende Wirkung und gegebenenfalls zusätzlich auch noch eine abbildende Wirkung bereitstellen.

Die Flächenstücke können für sich jeweils als plane Flächenstücke oder auch als gekrümmt ausgebildete Flächenstücke gebildet sein.

Die Schritte a) - e) und insbesondere die Schritte a) und b) können auch so ausgeführt werden, dass die optisch wirksame Struktur genau ein einziges Flächenstück aufweist, das die gewünschte optische Funktion bereitstellt. Das Flächenstück kann beispielsweise ein reflektives Flächenstück sein. Es kann eine vollständige Reflexion (nahezu 100 %) oder auch nur eine Teilreflexion (teilreflektives Flächenstück) bewirken. Das Flächenstück kann als planes Flächenstück oder als gekrümmtes Flächenstück ausgebildet sein. Insbesondere kann es aufgrund seiner Ausbildung (bevorzugt seiner gekrümmten Ausbildung) neben der umlenkenden Wirkung auch noch eine abbildende Wirkung aufweisen.

Wenn die optisch wirksame Struktur genau ein einziges Flächenstück aufweist, kann der strukturierte Abschnitt im Schritt a) genau eine einzige Vertiefung in der ersten Schale aufweisen. Diese Vertiefung kann mit Material bis zur Oberseite aufgefüllt werden. Dabei wird bevorzugt das gleiche Material verwendet, aus dem die erste Schale gebildet ist.

Die Auffüllung kann in einem Schritt oder in mehreren Auffüllschritten durchgeführt werden. Insbesondere wird die Auffüllung so durchgeführt, dass eine glatte durchgehende Oberseite vorliegt. Der aufgefüllte strukturierte Abschnitt bildet somit zusammen mit der restlichen Oberseite eine durchgehende Fläche.

Bei dem erfindungsgemäßen Verfahren kann das Brillenglast nach Durchführen des Schrittes e) fertiggestellt sein. Es ist jedoch auch möglich, noch zumindest einen materialabtragenden Bearbeitungsschritt durchzuführen, um beispielsweise die von der ersten Schale wegweisende Grenzfläche der zweiten Schale zu bearbeiten oder herauszuarbeiten. Gleiches gilt für die von der zweiten Schale wegweisende Grenzfläche der ersten Schale.

Natürlich kann auch noch zumindest ein oberflächenvergütender Verfahrensschritt durchgeführt werden, wie z. B. das Aufbringen einer Antireflexionsbeschichtung, einer Hartschicht, etc. Insbesondere können die aus der Fertigung von Brillengläsern bekannten Vergütungen durchgeführt werden.

Mit dem erfindungsgemäßen Verfahren kann somit das fertige Brillenglas bereitgestellt werden. Es ist jedoch auch möglich, dass noch weitere Verfahrensschritte notwendig sind, um das Brillenglas so fertigzustellen, dass es für seinen bestimmungsgemäßen Gebrauch einsetzbar ist.

Es wird ferner ein Brillenglas, das für einen vorbestimmten Wellenlängenbereich transparent ist und in dem eine optisch wirksame Struktur eingebettet ist, bereitgestellt, wobei das Brillenglas durch die Schritte des erfindungsgemäßen Verfahrens (einschließlich seiner Weiterbildungen) hergestellt ist.

Insbesondere kann das Brillenglas für eine auf den Kopf eines Benutzers aufsetzbare und ein Bild erzeugende Anzeigevorrichtung ausgebildet sein sowie eine Vorderseite und eine Rückseite, einen Einkoppelabschnitt und einen vom Einkoppelabschnitt beabstandeten Auskoppelabschnitt und einen Lichtführungskanal aufweisen, der Lichtbündel von Pixeln des erzeugten Bildes, die über den Einkoppelabschnitt des Brillenglases in das Brillenglas eingekoppelt sind, im Brillenglas bis zum Auskoppelabschnitt führt, von dem sie aus dem Brillenglas ausgekoppelt werden, wobei der Auskoppelabschnitt die optisch wirksame Struktur aufweist, die eine Umlenkung der Lichtbündel zur Auskopplung bewirkt, und wobei die Vorderseite von der von der ersten Schale wegweisenden Seite der zweiten Schale und die Rückseite von der von der zweiten Schale wegweisenden Seite der ersten Schale gebildet ist.

Die Führung der Lichtbündel im Lichtführungskanal kann insbesondere durch eine oder mehrere Reflexionen oder interne Totalreflexionen bewirkt werden. Die Reflexionen bzw. Totalreflexionen können an der Vorder- und Rückseite des Brillenglases bewirkt werden. Es ist jedoch auch möglich, dass eine, mehrere oder alle Reflexionen innerhalb des Brillenglases bewirkt werden. Dazu können eine oder zwei entsprechende reflektierenden Schichten vorgesehen sein.

Bei dem Brillenglas kann die optisch wirksame Struktur genau ein einziges reflektives Flächenstück aufweisen. Das reflektive Flächenstück kann eine vollständige Reflexion (nahezu 100 %) oder auch nur eine Teilreflexion bewirken.

Bevorzugt ist das einzige reflektive Flächenstück gekrümmt ausgebildet. Damit kann es neben der umlenkenden optischen Eigenschaft auch noch eine abbildende optische Eigenschaft aufweisen.

Natürlich ist es auch möglich, dass die optisch wirksame Struktur mehrere reflektive Flächenstücke aufweist. Diese sind bevorzugt voneinander beabstandet. Die mehreren reflektiven Flächenstücke können für sich plan und/oder gekrümmt ausgebildet sein. Ferner können die mehreren reflektiven Flächenstücke zusammen eine abbildende Eigenschaft bereitstellen. Die mehreren reflektiven Flächenstücke können jeweils eine vollständige Reflexion (nahezu 100 %) oder auch nur eine Teilreflexion (teilreflektive Flächenstücke) bewirken.

Ferner wird eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik bereitgestellt, die ein erfindungsgemäßes Brillenglas aufweist und die das erzeugte Bild im auf dem Kopf des Benutzers aufgesetzten Zustand der Haltevorrichtung so abbildet, dass es der Benutzer als virtuelles Bild wahrnehmen kann.

Die Abbildungsoptik kann das Brillenglas als einziges optisches Element aufweisen. Es ist jedoch auch möglich, dass die Abbildungsoptik neben dem Brillenglas noch zumindest ein weiteres optisches Element umfasst.

Die Anzeigevorrichtung kann eine Steuereinheit aufweisen, die das Bilderzeugungsmodul ansteuert.

Das Bilderzeugungsmodul kann insbesondere einen flächigen Bildgeber aufweisen, wie z. B. ein LCD-Modul, ein LCoS-Modul, ein OLED-Modul oder eine Kippspiegelmatrix. Der Bildgeber kann eine Mehrzahl von Pixeln aufweisen, die z. B. in Zeilen und Spalten angeordnet sein können. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung kann weitere, dem Fachmann bekannte Elemente aufweisen, die zu ihrem Betrieb notwendig sind.

Ferner wird ein Verfahren zur Herstellung der beschriebenen Anzeigevorrichtung bereitgestellt. Dabei wird das erfindungsgemäße Brillenglas gemäß dem erfindungsgemäßen Herstellungsverfahren hergestellt und das so hergestellte erfindungsgemäße Brillenglas wird mit den weiteren Elementen der Anzeigevorrichtung so kombiniert (oder zusammengebaut), dass die erfindungsgemäße Anzeigevorrichtung (einschließlich ihrer Weiterbildungen) hergestellt ist.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Zur besseren Anschaulichkeit wird in den Figuren zumindest teilweise auf eine maßstabs- und proportionsgetreue Darstellung und auf Schraffuren verzichtet. Es zeigen:
- Fig. 1: eine Ausführungsform der erfindungsgemäßen Anzeigevorrichtung;
- Fig. 2: eine vergrößerte Teilschnittansicht des erfindungsgemäßen Brillenglases 1 einschließlich einer schematischen Darstellung des Bilderzeugungsmoduls;
- Fig. 3 - 7: Teilschnittansichten zur Erläuterung der Herstellung des erfindungsgemäßen Brillenglases, und
- Fig. 8: eine Teilschnittansicht zur Erläuterung einer alternativen Art der Herstellung des erfindungsgemäßen Brillenglases.

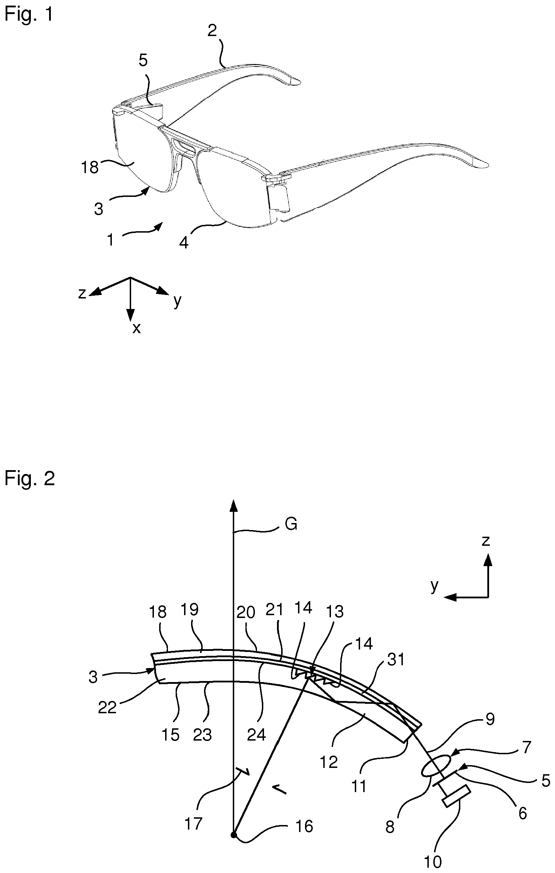

Bei der in Fig. 1 gezeigten Ausführungsform umfasst die erfindungsgemäße Anzeigevorrichtung 1 eine auf den Kopf eines Benutzers aufsetzbare Haltevorrichtung 2, die z. B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3, 4 kann z. B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsfeld eingespiegelt werden kann, wie nachfolgend beschrieben wird.

Dazu umfasst die Anzeigevorrichtung 1 ein Bilderzeugungsmodul 5, das im Bereich des rechten Brillenbügels der Haltevorrichtung 2 angeordnet sein kann, wie in Fig. 1 schematisch dargestellt ist. Das Bilderzeugungsmodul 5 kann ein flächiges Bilderzeugungselement 6 (Fig. 2), wie z. B. einen OLED-, einen LCD- oder einen LCoS-Chip oder eine Kippspiegelmatrix, mit einer Vielzahl von z. B. in Spalten und Zeilen angeordneten Pixeln aufweisen.

Die Brillengläser 3 und 4 und insbesondere das erste Brillenglas 3 sind nur beispielshalber zusammen mit der erfindungsgemäßen Anzeigevorrichtung 1 beschrieben. Die Brillengläser 3, 4 bzw. zumindest das erste Brillenglas 3 sind jeweils für sich als erfindungsgemäßes Brillenglas 3, 4 ausgebildet.

Wie am besten aus der vergrößerten, schematischen Teilschnittansicht in Fig. 2 ersichtlich ist, weist die Anzeigevorrichtung 1 eine Abbildungsoptik 7 auf, die ein zwischen dem Bilderzeugungselement 6 bzw. dem Bildgeber 6 und dem ersten Brillenglas 3 angeordnetes Optikelement 8 enthält. Des Weiteren dient das erste Brillenglas 3 selbst auch als Teil der Abbildungsoptik 7.

Von jedem Pixel des Bildgebers 6 kann ein Lichtbündel 9 ausgehen. Durch eine entsprechende Ansteuerung der Pixel des Bildgebers 6 mittels einer Steuereinheit 10, die Teil des Bilderzeugungsmoduls 5 sein kann, kann das gewünschte Bild erzeugt werden. In Fig. 2 ist stellvertretend für die Lichtbündel 9 der Strahlengang eines Lichtstrahls eingezeichnet, so dass nachfolgend auch von dem Lichtstrahl 9 die Rede ist.

Der vom Bildgeber 6 ausgehende Lichtstrahl 9 läuft durch das Optikelement 8 und tritt über einen Einkoppelabschnitt 11 (hier die Stirnseite des ersten Brillenglases 3) in das erste Brillenglas 3 ein und wird in diesem entlang eines Lichtführungskanals 12 bis zu einem Auskoppelabschnitt 13 geführt. Der Auskoppelabschnitt 13 weist mehrere nebeneinander angeordnete reflektive Umlenkflächen 14 (die auch als reflektive Facetten bezeichnet werden können) auf, an denen eine Reflexion der Lichtstrahlen 9 in Richtung zu einer Rückseite 15 des ersten Brillenglases 3 stattfindet, so dass die Lichtstrahlen 9 über die Rückseite 15 aus dem ersten Brillenglas 3 austreten. Alternativ kann der Auskoppelabschnitt 13 genau eine reflektive Umlenkfläche 14 aufweisen.

Somit kann ein Benutzer, wenn er die erfindungsgemäße Anzeigevorrichtung 1 bestimmungsgemäß auf dem Kopf trägt, das mittels des Bildgebers 6 erzeugte Bild als virtuelles Bild wahrnehmen, wenn er auf den Auskoppelabschnitt 13 blickt. Bei der hier beschriebenen Ausführungsform muss der Benutzer bezogen auf die Blickrichtung G eines Geradeausblicks um ca. 40° nach rechts schauen. In Fig. 2 ist zur Verdeutlichung der Drehpunkt 16 des Auges des Benutzers sowie die Eyebox 17 bzw. die Austrittspupille 17 der Abbildungsoptik 7 eingezeichnet. Die Eyebox 17 ist der Bereich, der durch die Anzeigevorrichtung 1 bereitgestellt wird und in dem sich das Auge des Benutzers bewegen kann und er stets noch das erzeugte Bild als virtuelles Bild sehen kann.

Obwohl bei der beschriebenen Ausführungsform die Einkopplung über die Stirnseite des ersten Brillenglases 3 durchgeführt ist und somit der Einkoppelabschnitt 11 auf der Stirnseite des ersten Brillenglases 3 ausgebildet ist, ist es auch möglich, eine Einkopplung über die Rückseite 15 des ersten Brillenglases durchzuführen.

Wie in der schematischen Darstellung in Fig. 2 gezeigt ist, ist sowohl die Rückseite 15 als auch die Vorderseite 18 des ersten Brillenglases 3 gekrümmt ausgebildet.

Das erste Brillenglas 3 ist ferner, wie insbesondere den Darstellungen in Fig. 2 zu entnehmen ist, zweischalig ausgebildet und umfasst eine Außenschale 19 mit einer ersten und zweiten Seite 20 und 21 sowie eine Innenschale 22 mit einer ersten und zweiten Seite 23 und 24.

Die erste Seite 20 der Außenschale 19 bildet die Vorderseite 18 des ersten Brillenglases 3 und die erste Seite 23 der Innenschale 22 bildet die Rückseite 15 des ersten Brillenglases 3. Die zweite Seite 21 der Außenschale 18 sowie die zweite Seite 24 der Innenschale 22, die einander zugewandt sind, weisen komplementäre Krümmungen auf und sind flächig über eine Kleberschicht 31 miteinander verbunden.

Der Lichtführungskanal 12 ist so ausgebildet, dass die gewünschte Führung der Lichtstrahlen 9 vom Einkoppelabschnitt 11 bis zum Auskoppelabschnitt 13 erfolgt. Dies kann z. B. durch innere Totalreflexion an der Vorderseite 18 (= erste Seite 20 der Außenschale 19) und der Rückseite 15 (= erste Seite 23 der Innenschale 22) erfolgen. Natürlich ist es auch möglich, dass auf der Vorderseite 18 und/oder auf der Rückseite 15 im Bereich des Lichtführungskanals 12 eine reflektive Beschichtung ausgebildet ist, die die gewünschte Reflexion der Lichtstrahlen 9 bewirkt. Die Reflektivität der reflektiven Beschichtung kann z. B. so groß wie möglich (ca. 100 %) oder geringer sein. Die reflektive Beschichtung kann somit als Spiegelschicht oder als teilreflektive Schicht ausgebildet sein.

Bei der hier beschriebenen Ausführungsform sind die beiden Seiten 20, 21 der Außenschale 19 sphärisch gekrümmt und weist die erste Seite 20 der Außenschale 19 einen Krümmungsradius von 94 mm und weist die zweite Seite 21 der Außenschale 19 einen Krümmungsradius von 92 mm auf. Somit beträgt die Dicke der Außenschale 2 mm. Die Außenschale 19 kann aber auch mit einer geringen Dicke ausgebildet sein. So kann die Dicke der Außenschale 19 im Bereich von 0,15 mm bis kleiner als 2 mm liegen. Insbesondere kann die Außenschale 19 als formstabile Folie ausgebildet sein. Unter formstabil wird hier insbesondere verstanden, dass die Folie zumindest der Schwerkraft widersteht und somit ihre Form beibehält, wenn keine anderen Kräfte auf sie einwirken.

Die zweite Seite 24 der Innenschale 22 ist sphärisch gekrümmt und weist einen Krümmungsradius auf, der dem Radius der zweiten Seite 21 der Außenschale 19 entspricht. Dies ist hier also ein Radius von 92 mm. Die erste Seite 23 der Innenschale 22 ist sphärisch gekrümmt und weist den zur Korrektur der Fehlsichtigkeit des Benutzers erforderlichen Krümmungsradius auf (z. B. 150 mm bei der Verwendung von PMMA als Material für die Innenschale 22). Natürlich kann die erste Seite 23 der Innenschale auch asphärisch gekrümmt sein. Bevorzugt ist das Material der Außenschale 19 das gleiche wie das Material der Innenschale 22. Die Dicke der Innenschale 22 hängt im Wesentlichen vom Unterschied zwischen dem Radius der zweiten Seite 24 der Innenschale 22 und der ersten Seite 23 der Innenschale 22 ab und beträgt in dem hier beschriebenen Beispiel ca. 3 mm.

Wie bereits erwähnt, sind die Materialien der Innen- und Außenschale 22 und 19 bevorzugt gleich, so dass sie einen identischen Brechungsindex aufweisen. Die Innen- und Außenschale 22 und 19 sind bevorzugt ganzflächig über die Kleberschicht verklebt, so dass ein kompaktes erstes Brillenglas 3 bereitgestellt ist.

Das erste Brillenglas 3 der hier beschriebenen Ausführungsform stellt eine Korrektur von + 2 Dioptrien bereit.

Das erfindungsgemäße Brillenglaskann wie folgt hergestellt werden.

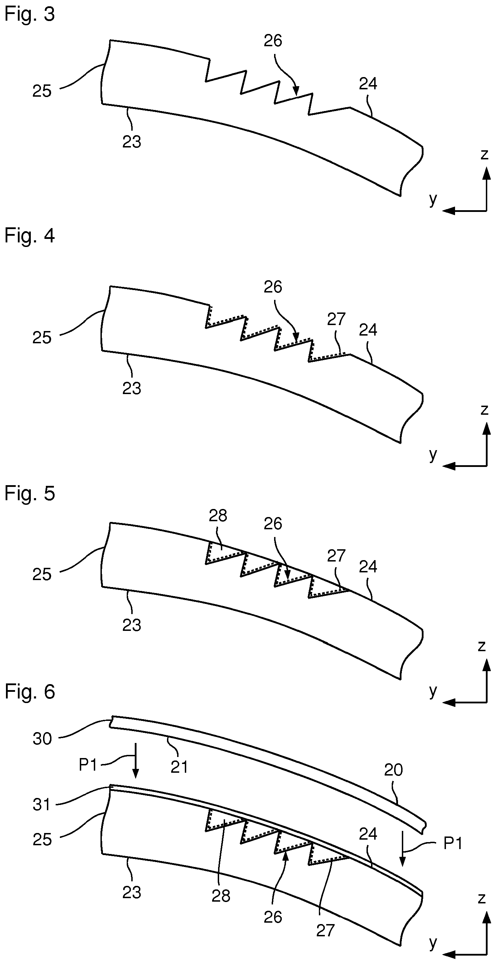

In einem ersten Schritt wird ein erstes Halbzeug 25 im Spritzguss aus einem thermoplastischen Polymer hergestellt. Wie in der vergrößerten Teilschnittansicht von Fig. 3 gezeigt ist, weist das erste Halbzeug 25 die erste Seite 23 und die zweite Seite 24 auf. An der zweiten Seite 24 ist eine Mikrostrukturierung 26 ausgebildet, die die Form der gewünschten reflektiven Facetten 14 vorgibt.

Das erste Halbzeug 25 wird dann im Bereich der Mikrostrukturierung 26 mit einer optisch wirksamen Schicht 27 beschichtet, die mit gestrichelte Linie dargestellt ist (zur Vereinfachung der Darstellung ist die Schicht 27 in Fig. 2 nicht eingezeichnet). Dazu können bekannte Beschichtungsverfahren verwendet werden, wie z. B. ein chemisches Abscheiden aus der Gasphase (CVD) oder ein physikalisches Abscheiden aus der Gasphase (PVD). Die optisch wirksame Schicht 27, die in Fig. 4 gestrichelt dargestellt ist, ist so gewählt, dass die beschriebenen relativen Facetten 14 bereitgestellt sind.

Die aufgrund der Mikrostrukturierung 26 vorhandenen Vertiefungen, die sich von der zweiten Seite 24 in das Halbzeug 25 hinein erstrecken, werden in einem nachfolgenden Schritt so aufgefüllt, dass sich eine glatte durchgehende zweite Seite 24 ergibt (Fig. 5). Zum Auffüllen der Vertiefungen kann das gleiche Material 28 wie das Material zur Herstellung des Halbzeuges 25 oder auch ein optischer Kitt oder optischer Klebstoff 28 verwendet werden.

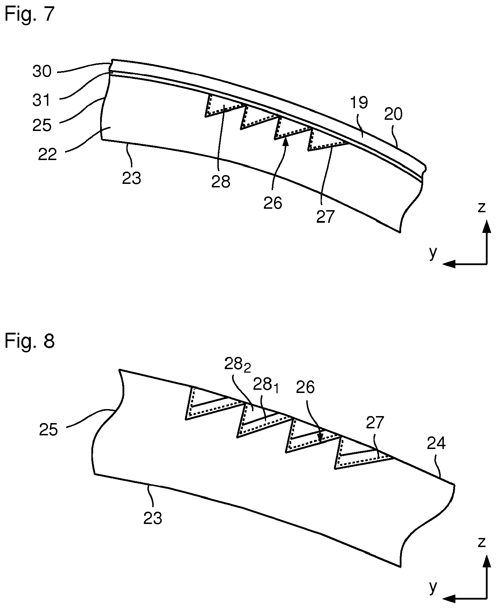

Danach wird die Außenschale 19 als zweites Halbzeug 30 im Spritzguss aus einem thermoplastischen Polymer so hergestellt, dass es die erste und zweite Seite 20, 21 aufweist. Das zweite Halbzeug 30 kann alternativ vor der Herstellung des ersten Halbzeuges 25 oder gleichzeitig mit dem ersten Halbzeug 25 hergestellt werden. Dieses zweite Halbzeug 28 wird dann ganzflächig mit dem ersten Halbzeug 25 verklebt. Dazu kann die zweite Seite 21 des zweiten Halbzeugs 30 und/oder die zweite Seite 24 des ersten Halbzeugs 25 mit einem optischen Kleber oder einem optischen Kitt beschichtet werden, um eine Kleberschicht 31 zu bilden. In Fig. 6 ist der Fall gezeigt, bei dem die zweite Seite 24 des ersten Halbzeugs 25 mit der Kleberschicht 31 beschichtet ist. Dann werden die beiden Halbzeuge an ihren Flächen 21 und 24 über die Kleberschicht 31 miteinander in Kontakt gebracht, wie durch die Pfeile P1 in Fig. 6 angedeutet ist und die Kleberschicht 31 wird ausgehärtet, um so das erfindungsgemäße optische Element 3 herzustellen, wie es in Fig. 7 gezeigt ist. Somit liegt das erfindungsgemäße optische Element 3 vor, das zweischalig aufgebaut ist, wobei die Außenseiten 23 und 20 der beiden Schalen 19 und 22 die Rückseite 15 und die Vorderseite 18 des ersten Brillenglases 3 bilden.

Als Material für die beiden Halbzeuge 25 und 30 können unterschiedliche Materialen verwendet werden. Bevorzugt wird jedoch für beide Halbzeuge 25 und 30 das gleiche Material verwendet. Insbesondere werden thermoplastische Polymere und/oder duroplastische Polymere verwendet.

Als thermoplastische Polymere können z. B. PMMA (Polymethylmethacrylat, z. B. Plexiglas), PA (Polyamide, z. B. Trogamid CX), COP (Cycloolefin-Polymere, z. B. Zeonex), PC (Polycarbonat, Poly(bisphenol-A-carbonat), z. B. Makrolon), LSR (Liquid Silicone Rubber, z. B. Silopren, Elastosil), PSU (Polysulfon, z. B. Ultrason), PES (Polyethersulfon) und/oder PAS (Polyarylensulfon) verwendet werden. Als duroplastische Polymere können z. B. ADC (Allyl-Diglykolcarbonat, z. B. CR-39), Acrylate (z. B. Spectralite), PUR (Polyurethane, z. B. RAVolution), PU/PUR (Polyharnstoffe, Polyurethane, z. B. Trivex), PTU (Polythiourethane, z. B. MR-8, MR-7) und/oder Polymere auf Episulfid/Polythiol-Basis (z. B. MR-174) verwendet werden.

In Fig. 8 ist in einer vergrößerten Schnittdarstellung das erste Halbzeug 25 mit der Mikrostrukturierung 26 und der optisch wirksamen Schicht 27 gezeigt. Im Unterschied zu dem bisher beschriebenen Auffüllen der Mikrostrukturierung 26 in einem Schritt wird dies bei der Variante gemäß Fig. 8 in zwei Schritten durchgeführt. Damit kann ein unerwünschter Schrumpf, der beim Aushärten des Materials der Auffüllschichten 28₁, 28₂ auftreten kann (Auffüllschicht 28₁ und danach Auffüllschicht 28₂), vermindert werden. Natürlich kann die Auffüllung auch in mehr als zwei Schritten, z. B. in drei, vier, fünf, sechs Schritten durchgeführt werden.

Bei der erfindungsgemäßen Anzeigevorrichtung 1 erfolgt die Einspiegelung des virtuellen Bildes in das Gesichtsfeld des Benutzers über das erste Brillenglas 3. Natürlich ist auch eine Einspiegelung über das zweite Brillenglas 4 möglich. Des Weiteren kann die Anzeigevorrichtung 1 so ausgebildet sein, dass Informationen bzw. virtuelle Bilder über beide Brillengläser 3, 4 eingespiegelt werden. Dabei kann die Einspiegelung so erfolgen, dass ein dreidimensionaler Bildeindruck entsteht. Dies ist jedoch nicht zwingend notwendig.

Die Brillengläser 3, 4 können eine Brechkraft von Null oder eine von Null verschiedene Brechkraft (insbesondere zur Korrektur von Fehlsichtigkeiten) aufweisen. Wie in den Figuren gezeigt ist, sind sowohl die Vorderseite 11 als auch die Rückseite 12 des Brillenglases 3 gekrümmt ausgebildet. Die Vorderseite 11 kann insbesondere sphärisch gekrümmt sein. Wenn das Brillenglas eine von Null verschiedene Brechkraft aufweist, um eine Fehlsichtigkeit zu korrigieren, ist in der Regel die Krümmung der Rückseite 15 entsprechend gewählt, um die entsprechende Korrektur zu erreichen. Die Rückseite 15 kann eine von der sphärischen Form abweichende Krümmung aufweisen.

Die Haltevorrichtung 2 muss nicht als brillenartige Haltevorrichtung ausgebildet sein. Es ist auch jede andere Art der Haltevorrichtung möglich, mit der ein Aufsetzen oder Tragen der Anzeigevorrichtung auf dem Kopf des Benutzers erfolgen kann.

## Patentansprüche

1. Verfahren zum Herstellen eines Brillenglases (3, 4) für eine auf den Kopf eines Benutzers aufsetzbare und ein Bild erzeugende Anzeigevorrichtung (1), wobei das Brillenglas (3, 4) für einen vorbestimmten Wellenlängenbereich transparent ist und im Brillenglas (3, 4) eine optisch wirksame Struktur (13), die als reflektive Struktur ausgebildet ist, eingebettet ist, mit folgenden Schritten:
a) Bereitstellen einer ersten für den vorbestimmten Wellenlängenbereich transparenten Schale (22, 25), die einstückig ausgebildet ist und die an ihrer Oberseite (24) einen strukturierten Abschnitt (26) aufweist,
b) Aufbringen einer für den vorbestimmten Wellenlängenbereich optisch wirksamen Beschichtung (27) auf dem strukturierten Abschnitt (26), um die optisch wirksame Struktur (13) zu bilden,
c) Bereitstellen einer zweiten für den vorbestimmten Wellenlängenbereich transparenten Schale (19, 30), die einstückig ausgebildet ist,
d) Aufbringen einer für den vorbestimmten Wellenlängenbereich transparenten Kleberschicht (31) auf der Oberseite (24) der ersten Schale (22, 25) und/oder der Unterseite (21) der zweiten Schale (19, 30) und
e) Verbinden der Oberseite (24) der ersten Schale (22, 25) mit der Unterseite (21) der zweiten Schale (19, 30) mittels der Kleberschicht (31), so dass ein zweischaliges Brillenglases (3, 4) hergestellt wird, in dem die optisch wirksame Struktur (13) vergraben ist,
wobei die erste und zweite Schale (22, 25, 19, 30) in den Schritten a) und c) jeweils als formstabile Schale (22, 25, 19, 30) bereitgestellt werden,
**dadurch gekennzeichnet, dass**
die im Schritt c) bereitgestellte Schale (19, 30) eine glatte Unterseite (21) sowohl im Bereich des strukturierten Abschnitts (26) als auch außerhalb des strukturierten Abschnitts (26) aufweist, und dass die Unterseite (21) eine komplementäre Form zur Form der Oberseite (24) außerhalb des strukturierten Abschnitts (26) aufweist.

2. Verfahren nach Anspruch 1, bei dem die erste und zweite Schale (22, 19) in den Schritten a) und c) so bereitgestellt werden, dass die Oberseite (24) und die Unterseite (21) gekrümmt ausgebildet sind, und dass die jeweilige von der Ober- und Unterseite (24, 21) wegweisende Seite (23, 20) gekrümmt ausgebildet ist.

3. Verfahren nach einem der obigen Ansprüche, bei dem die erste Schale (22) im Schritt a) so bereitgestellt wird, dass die Oberseite (24) mit Ausnahme des strukturierten Abschnittes (26) als glatte Fläche ausgebildet wird.

4. Verfahren nach einem der obigen Ansprüche, bei dem nach dem Schritt b) zumindest eine durch den strukturierten Abschnitt (26) gebildete Vertiefung mit Material bis zur Oberseite (24) aufgefüllt wird.

5. Verfahren nach einem der obigen Ansprüche, bei dem die Schritte a) und b) so ausgeführt werden, dass die optisch wirksame Struktur (13) voneinander beabstandete reflektive Flächenstücke (14) aufweist.

6. Verfahren nach einem der Ansprüche 1 bis 4, bei dem die Schritte a) und b) so ausgeführt werden, dass die optisch wirksame Struktur (13) genau ein reflektives Flächenstück (14) aufweist.

7. Verfahren nach einem der obigen Ansprüche, bei dem im Schritt d) die Kleberschicht (31) auf die gesamte Oberseite (24) der ersten Schale (22) und/oder die gesamte Unterseite (21) der zweiten Schale (19) aufgebracht wird.

8. Brillenglas (3, 4) für eine auf den Kopf eines Benutzers aufsetzbare und ein Bild erzeugende Anzeigevorrichtung (1), wobei das Brillenglas (3, 4) als zweischaliges Brillenglas (3, 4) mit einer ersten und einer zweiten Schale (22, 25, 19, 30), die über eine Kleberschicht (31) direkt miteinander verbunden sind, ausgebildet ist, wobei im Brillenglas (3, 4) eine optisch wirksame Struktur (13), die als reflektive Struktur ausgebildet ist, eingebettet ist und das Brillenglas (3, 4) durch die Schritte eines der Ansprüche 1 bis 7 hergestellt ist.

9. Brillenglas (3, 4) nach Anspruch 8, bei dem die optisch wirksame Struktur (13) genau ein einziges reflektives Flächenstück (14) aufweist.

10. Brillenglas (3, 4) nach Anspruch 9, bei dem das reflektive Flächenstück (14) gekrümmt ausgebildet ist.

11. Brillenglas (3, 4) nach einem der Ansprüche 8 bis 10, wobei das Brillenglas (3, 4) eine Vorderseite (18) und eine Rückseite (15),
einen Einkoppelabschnitt (11) und einen vom Einkoppelabschnitt (11) beabstandeten Auskoppelabschnitt (13) und
einen Lichtführungskanal (12) aufweist, der dazu geeignet ist, Lichtbündel (9) von Pixeln des erzeugten Bildes, die über den Einkoppelabschnitt (11) des Brillenglases (3, 4) in das Brillenglas (3, 4)eingekoppelt sind, im Brillenglas (3, 4) bis zum Auskoppelabschnitt (13) zu führen, von dem sie aus dem Brillenglas (3, 4) ausgekoppelt werden,
wobei der Auskoppelabschnitt (13) die optisch wirksame Struktur aufweist, die eine Umlenkung der Lichtbündel (9) zur Auskopplung bewirkt, und wobei die Vorderseite (18) von der von der ersten Schale (22) wegweisenden Seite (20) der zweiten Schale (19) und die Rückseite (15) von der von der zweiten Schale (19) wegweisenden Seite (23) der ersten Schale gebildet ist (22).

12. Anzeigevorrichtung mit
einer auf den Kopf eines Benutzers aufsetzbaren Haltevorrichtung (2),
einem an der Haltevorrichtung (2) befestigten Bilderzeugungsmodul (5), das ein Bild erzeugt, und
einer an der Haltevorrichtung (2) befestigten Abbildungsoptik (7), die ein Brillenglas (3, 4) nach Anspruch 11 aufweist und die das erzeugte Bild im auf dem Kopf des Benutzers aufgesetzten Zustand der Haltevorrichtung (2) so abbildet, dass es der Benutzer als virtuelles Bild wahrnehmen kann.

## Claims

1. Method for producing a spectacle lens (3, 4) for a display device (1) which can be placed on the head of a user and generates an image, the spectacle lens (3, 4) being transparent for a predetermined wavelength range and an optically effective structure (13), which is designed as a reflective structure, being embedded in the spectacle lens (3, 4), having the following steps:
a) providing a first shell (22, 25) which is transparent for the predetermined wavelength range, which is formed in one piece and which has a structured section (26) on its upper side (24),
b) applying a coating (27) which is optically effective for the predetermined wavelength range to the structured section (26) in order to form the optically effective structure (13),
c) providing a second shell (19, 30) which is transparent for the predetermined wavelength range and which is formed in one piece,
d) applying an adhesive layer (31) which is transparent for the predetermined wavelength range to the upper side (24) of the first shell (22, 25) and/or the underside (21) of the second shell (19, 30), and
e) bonding the upper side (24) of the first shell (22, 25) to the underside (21) of the second shell (19, 30) by means of the adhesive layer (31), so that a double-shell spectacle lens (3, 4) is produced in which the optically active structure (13) is buried,
wherein the first and second shells (22, 25, 19, 30) are each provided in steps a) and c) as a dimensionally stable shell (22, 25, 19, 30),
**characterized in that**
the shell (19, 30) provided in step c) has a smooth underside (21) both in the region of the structured section (26) and outside the structured section (26), and **in that** the underside (21) has a complementary shape to the shape of the upper side (24) outside the structured section (26).

2. Method according to claim 1, wherein the first and second shells (22, 19) are provided in steps a) and c) such that the upper side (24) and the underside (21) are formed curved, and that the respective side (23, 20) facing away from the upper side (24) and the underside (21) is formed curved.

3. Method according to one of the preceding claims, wherein the first shell (22) is provided in step a) in such a way that the upper side (24) is formed as a smooth surface with the exception of the structured section (26).

4. Method according to one of the preceding claims, in which, after step b), at least one depression formed by the structured section (26) is filled with material up to the upper surface (24).

5. Method according to one of the preceding claims, wherein steps a) and b) are carried out in such a way that the optically effective structure (13) comprises reflective surface pieces (14) spaced apart from each other.

6. Method according to any one of claims 1 to 4, wherein steps a) and b) are carried out in such a way that the optically effective structure (13) comprises exactly one reflective surface piece (14).

7. Method according to one of the preceding claims, wherein in step d) the adhesive layer (31) is applied to the entire upper side (24) of the first shell (22) and/or the entire underside (21) of the second shell (19).

8. Spectacle lens (3, 4) for a display device (1) which can be placed on the head of a user and generates an image, the spectacle lens (3, 4) being in the form of a two-shell spectacle lens (3, 4) having a first and a second shell (22, 25, 19, 30), which are directly connected to one another via an adhesive layer (31), an optically effective structure (13), which is designed as a reflective structure, being embedded in the spectacle lens (3, 4), and the spectacle lens (3, 4) being produced by the steps of one of claims 1 to 7.

9. Spectacle lens (3, 4) according to claim 8, wherein the optically effective structure (13) comprises exactly one single reflective surface piece (14).

10. Spectacle lens (3, 4) according to claim 9, in which the reflective surface piece (14) is curved.

11. Spectacle lens (3, 4) according to any one of claims 8 to 10, wherein the spectacle lens (3, 4) comprises
a front side (18) and a rear side (15),
a coupling-in section (11) and a coupling-out section (13) spaced from coupling-in section (11), and
a light guide channel (12) which is suitable for guiding light beams (9) of pixels of the generated image, which are coupled into the spectacle lens (3, 4) via the coupling-in section (11) of the spectacle lens (3, 4), in the spectacle lens (3, 4) as far as the coupling-out section (13), from which they are coupled out of the spectacle lens (3, 4),
wherein the coupling-out section (13) has the optically effective structure which effects a deflection of the light beams (9) for coupling-out, and wherein
the front side (18) is formed by the side (20) of the second shell (19) pointing away from the first shell (22) and the rear side (15) is formed by the side (23) of the first shell (22) pointing away from the second shell (19).

12. Display device with
a holding device (2) which can be placed on the head of a user,
an image generating module (5) attached to the holding device (2), which generates an image, and
an imaging optics (7) which is fastened to the holding device (2) and has a spectacle lens (3, 4) according to claim 11 and which images the generated image in the state of the holding device (2) placed on the user's head in such a way that the user can perceive it as a virtual image.

## Revendications

1. Procédé de fabrication d'un verre de lunettes (3, 4) pour un dispositif d'affichage (1) pouvant être posé sur la tête d'un utilisateur et produisant une image, le verre de lunettes (3, 4) étant transparent pour une plage de longueurs d'onde prédéterminée et une structure optiquement active (13), qui est conçue comme une structure réfléchissante, étant noyée dans le verre de lunettes (3, 4), comprenant les étapes suivantes :
a) Préparation d'une première coque (22, 25) transparente pour la plage de longueurs d'onde prédéterminée, qui est réalisée d'une seule pièce et qui présente sur sa face supérieure (24) une section structurée (26),
b) application d'un revêtement (27) optiquement efficace pour la gamme de longueurs d'onde prédéterminée sur la section structurée (26) afin de former la structure optiquement efficace (13),
c) fournir une deuxième coque (19, 30) transparente pour la gamme de longueurs d'onde prédéterminée, qui est formée d'une seule pièce,
d) application d'une couche de colle (31) transparente pour la plage de longueurs d'onde prédéterminée sur la face supérieure (24) de la première coque (22, 25) et/ou sur la face inférieure (21) de la deuxième coque (19, 30), et
e) relier la face supérieure (24) de la première coque (22, 25) à la face inférieure (21) de la deuxième coque (19, 30) au moyen de la couche de colle (31), de sorte qu'un verre de lunettes à deux coques (3, 4) est fabriqué, dans lequel la structure optiquement active (13) est enterrée,
la première et la deuxième coque (22, 25, 19, 30) étant préparées dans les étapes a) et c) respectivement comme coque dimensionnellement stable (22, 25, 19, 30),
**caractérisé en ce que**
la coque (19, 30) fournie à l'étape c) présente une face inférieure lisse (21) aussi bien au niveau de la section structurée (26) qu'à l'extérieur de la section structurée (26), et **en ce que** la face inférieure (21) présente une forme complémentaire à la forme de la face supérieure (24) à l'extérieur de la section structurée (26).

2. Procédé selon la revendication 1, dans lequel la première et la deuxième coques (22, 19) sont préparées dans les étapes a) et c) de telle sorte que la face supérieure (24) et la face inférieure (21) sont formées de manière incurvée, et que le côté respectif (23, 20) s'écartant de la face supérieure et de la face inférieure (24, 21) est formé de manière incurvée.

3. Procédé selon l'une quelconque des revendications ci-dessus, dans lequel la première coque (22) est préparée à l'étape a) de manière à ce que la face supérieure (24), à l'exception de la section structurée (26), soit réalisée sous forme de surface lisse.

4. Procédé selon l'une des revendications ci-dessus, dans lequel, après l'étape b), au moins une cavité formée par la section structurée (26) est remplie de matériau jusqu'à la face supérieure (24).

5. Procédé selon l'une quelconque des revendications ci-dessus, dans lequel les étapes a) et b) sont réalisées de manière à ce que la structure optiquement active (13) présente des morceaux de surface réfléchissante (14) espacés les uns des autres.

6. Procédé selon l'une quelconque des revendications 1 à 4, dans lequel les étapes a) et b) sont exécutées de telle sorte que la structure optiquement active (13) présente exactement un élément de surface réfléchissant (14).

7. Procédé selon l'une quelconque des revendications ci-dessus, dans lequel, à l'étape d), la couche adhésive (31) est appliquée sur toute la face supérieure (24) de la première coque (22) et/ou sur toute la face inférieure (21) de la deuxième coque (19).

8. Verre de lunettes (3, 4) pour un dispositif d'affichage (1) pouvant être posé sur la tête d'un utilisateur et produisant une image, le verre de lunettes (3, 4) se présentant sous la forme d'un verre de lunettes (3, 4) à deux coques avec une première et une deuxième coque (22, 25, 19, 30), qui sont directement reliées l'une à l'autre par une couche de colle (31), une structure optiquement active (13), qui est conçue comme une structure réfléchissante, étant noyée dans le verre de lunettes (3, 4) et le verre de lunettes (3, 4) étant fabriqué par les étapes de l'une des revendications 1 à 7.

9. Verre de lunettes (3, 4) selon la revendication 8, dans lequel la structure optiquement active (13) présente exactement une seule pièce de surface réfléchissante (14).

10. Verre de lunettes (3, 4) selon la revendication 9, dans lequel la pièce de surface réfléchissante (14) est réalisée sous forme incurvée.

11. Verre de lunettes (3, 4) selon l'une quelconque des revendications 8 à 10, dans lequel le verre de lunettes (3, 4) comporte
une face avant (18) et une face arrière (15),
une section de couplage (11) et une section de découplage (13) espacée de la section de couplage (11), et
un canal de guidage de lumière (12) qui est adapté pour guider des faisceaux lumineux (9) de pixels de l'image générée, qui sont couplés dans le verre de lunettes (3, 4) via la section de couplage (11) du verre de lunettes (3, 4), dans le verre de lunettes (3, 4) jusqu'à la section de découplage (13), à partir de laquelle ils sont découplés du verre de lunettes (3, 4),
la section de découplage (13) présentant la structure optiquement active qui provoque une déviation des faisceaux lumineux (9) pour le découplage, et dans lequel
la face avant (18) est formée par la face (20) de la deuxième coque (19) qui est opposée à la première coque (22) et la face arrière (15) est formée par la face (23) de la première coque (22) qui est opposée à la deuxième coque (19).

12. Dispositif d'affichage comprenant
un dispositif de support (2) pouvant être placé sur la tête d'un utilisateur,
un module de formation d'image (5) fixé au dispositif de support (2), qui forme une image, et
une optique de représentation (7) fixée au dispositif de maintien (2), qui comprend un verre de lunettes (3, 4) selon la revendication 11 et qui représente l'image générée dans l'état du dispositif de maintien (2) posé sur la tête de l'utilisateur, de telle sorte que l'utilisateur peut la percevoir comme une image virtuelle.
